# DEMANDE DE BREVET EUROPEEN

(11) **EP 1 293 892 A1**
(43) Date de publication de la demande: **19.03.2003**
(21) Numéro de dépôt: 02075605.2
(22) Date de dépôt: 06.02.2002
(51) Int. Cl.: G06F 9/44

(54) **Station de programmation élaborant un programme compacté et équipement d'automatisme utilisant un tel programme**

(30) Priorité: 19.02.2001 FR 0102303
(71) Demandeur: Schneider Automation, 06560 Valbonne (FR)
(72) Inventeur: Nicolle, Pascal, 06500 Cagnes s/Mer (FR); Tuccinardi, Christian, 06220 Golfe Juan (FR); Bories, Bruno, 06110 Le Cannet (FR)

(57) **Abrégé**

La présente invention concerne une station de programmation comportant une mémoire contenant des fichiers de description, chaque fichier de description étant descriptif d'une partie d'une application d'automatisme et étant exprimé dans un langage unique, hiérarchisé et orienté objet, tel que le langage XML. La station de programmation utilise un programme de compression permettant de générer, pour chaque fichier de description, un fichier au format compacté mémorisé dans une mémoire de l'équipement d'automatisme. Le programme de compression comporte une étape de réduction des balises contenues dans un fichier de description par application d'une feuille de style spécifique et une étape de déroulement d'un algorithme de compactage adapté aux fichiers XML.

## Description

La présente invention concerne une station de programmation élaborant un programme compacté à partir d'un langage unique, hiérarchisé et orienté objet pour programmer une application d'automatisme et un équipement d'automatisme utilisant un tel programme.

Une station de programmation désigne ci-après un équipement informatique, notamment un ordinateur personnel de type PC, connectable à un équipement d'automatisme. Un équipement d'automatisme désigne ci-après un automate programmable, une station de contrôle/commande, une commande numérique ou tout équipement pouvant contenir et exécuter un programme d'application contrôlant une application d'automatisme. Cette application d'automatisme appartient par exemple au domaine des automatismes industriels, des automatismes du bâtiment ou du contrôle/commande des réseaux électriques de distribution.

Un tel équipement d'automatisme est composé d'une unité centrale et d'un ou plusieurs coupleurs d'entrées-sorties connectés à des capteurs et à des préactionneurs de l'application d'automatisme à commander.

L'unité centrale comprend au moins un processeur, une mémoire non volatile, en général non modifiable (type ROM), ou modifiable (type EEPROM), contenant le programme constructeur appelé encore système d'exploitation propriétaire (proprietary operating system) exprimé dans un langage spécifique au constructeur de l'équipement d'automatisme, une mémoire vive et un gestionnaire des entrées/sorties, qui communiquent entre eux par un bus dit de fond de panier. La mémoire vive ou mémoire volatile (type RAM) contient, dans une première zone, le programme utilisateur et dans une deuxième zone, les données, en particulier les images des états des coupleurs d'entrées-sorties et les constantes relatives au programme utilisateur.

Le programme utilisateur, ou appelé encore programme d'application, est chargé de faire du contrôle ou de la commande d'une application d'automatisme au moyen d'entrées/sorties pilotées par ce programme d'application. Il est élaboré par un concepteur et est écrit dans un ou plusieurs langages graphiques d'automatisme intégrant notamment des schémas à contacts (Ladder Diagram), appelés ci-après langage Ladder, des diagrammes fonctionnels en séquence (Sequential Function Chart ou langage Grafcet), appelés ci-après langage SFC, des blocs fonctions (Function Block Description), appelés ci-après langage FBD, ou bien dans un langage textuel d'automatisme de type IL (Instruction List) ou ST (Structured Text). Ces langages d'automatisme sont avantageusement conformes à la norme IEC1131-3, de façon à faciliter la programmation par un concepteur automaticien ne maîtrisant pas forcément les langages informatiques. Ces langages sont utilisables sur des stations de programmation qui sont reliées ou non à l'équipement d'automatisme à programmer.

A ce jour, les programmes d'application résultant de l'utilisation des langages graphiques d'automatisme conformes à la norme IEC1131-3 ne peuvent pas être échangés entre équipements d'automatisme de constructeurs différents ayant des programmes constructeurs reposant sur des langages constructeurs différents et des ateliers de programmation différents. En effet après que le concepteur d'un automatisme ait réalisé le programme d'application dans un des langages normalisés, la station de programmation ou l'équipement d'automatisme sur lequel le concepteur travaille, traduit ce programme en un fichier binaire dépendant du langage spécifique de chaque constructeur d'équipement d'automatisme. Seul ce fichier est mémorisé dans l'équipement d'automatisme afin d'être exécuté par le processeur de l'équipement d'automatisme.

Un tiers, connecté à l'équipement d'automatisme par une station de programmation de type PC et ne disposant pas sur sa station d'un programme de décompilation, ne pourra pas comprendre le programme d'application d'automatisme en format binaire stocké dans l'équipement d'automatisme et ne pourra pas y apporter des modifications sans avoir équipé sa station d'une pluralité de programmes de programmation spécifiques au constructeur (atelier de programmation). Une solution serait de mémoriser sur l'équipement d'automatisme le programme d'application en langage source, mais la taille de ce programme source serait souvent incompatible avec la taille de la mémoire de l'équipement d'automatisme.

Un premier but de l'invention est d'obtenir une station de programmation utilisant un langage unique éditable par n'importe quel éditeur pour élaborer des programmes d'application d'automatisme dans un format compacté, quel que soit le langage graphique utilisé pour décrire le fonctionnement de l'équipement d'automatisme.

Ce but est atteint par une station de programmation d'une application d'automatisme destinée à être exécutée dans un équipement d'automatisme, la station de programmation comportant une mémoire contenant un ensemble d'un ou plusieurs fichiers de description, chaque fichier de description étant descriptif d'une partie de l'application et étant exprimé dans un langage unique, hiérarchisé et orienté objet. La station de programmation utilise un programme de compression permettant de générer, pour chaque fichier de description, un fichier au format compacté, dont le contenu reste suffisant à la description de la partie de l'application considérée, et en ce qu'elle utilise un programme de chargement pour mémoriser chaque fichier compacté dans une mémoire de l'équipement d'automatisme.

Selon une caractéristique, la station de programmation utilise un programme de décompression pour générer à partir d'un fichier compacté mémorisé dans la mémoire de l'équipement d'automatisme, un fichier de description dans un langage unique, hiérarchisé et orienté objet, descriptif d'une partie de l'application.

Selon une autre caractéristique, le langage unique, hiérarchisé et orienté objet est le langage XML (eXtended Markup Language).

Selon une autre caractéristique, l'ensemble d'un ou plusieurs fichiers de description contient un fichier de description du programme d'application, un fichier de description des entrées-sorties de l'application et un fichier de description des données de l'application.

Selon une autre caractéristique, le programme de compression comporte une étape de réduction des balises contenues dans un fichier de description exprimé en langage XML par application d'une feuille de style spécifique et une étape de déroulement d'un algorithme de compactage adapté aux fichiers XML. Le programme de décompression comporte une étape de déroulement d'un algorithme de décompactage adapté aux fichiers XML et une étape de recréation des balises d'origine contenues dans un fichier de description exprimé en langage XML, par application d'une feuille de style spécifique.

Selon une autre particularité, la station de programmation incorpore, dans une mémoire non volatile, un gestionnaire XML (XML Hndlr) dialoguant par des notifications, d'une part avec un module de gestion de l'arborescence représentative de l'application d'automatisme exprimée en langage XML et d'autre part avec une pluralité de gérants de bases de données, chacun spécifique à une partie de l'application d'automatisme mémorisée dans une des bases de données.

Un autre but de l'invention est de proposer un équipement d'automatisme permettant l'importation ou l'exportation des applications d'automatisme qu'il exécute sur une station de programmation pourvue d'un éditeur ou afficheur XML.

Ce but est atteint par le fait que l'équipement d'automatisme comprend une mémoire contenant un programme d'application d'automatisme sous la forme d'un fichier binaire exécutable par l'équipement d'automatisme. A partir d'un ou plusieurs fichiers de description descriptifs de toute ou partie de l'application et exprimés dans un langage unique, hiérarchisé et orienté objet, l'équipement d'automatisme mémorise dans la mémoire, en plus du fichier binaire exécutable, un ou plusieurs fichiers au format compacté issus du ou des fichiers de description et dont le contenu reste suffisant à la description de l'application.

Selon une particularité, le langage unique, hiérarchisé et orienté objet est le langage XML (eXtended Markup Language).

Selon une autre particularité, l'équipement d'automatisme comporte des moyens de traduction permettant de convertir des fichiers de description de l'application exprimés en langage XML en un fichier binaire exécutable par l'équipement d'automatisme.

Selon une autre particularité, l'équipement d'automatisme comporte des moyens de décompression d'un fichier en langage compacté vers un fichier de description en langage XML par utilisation d'une feuille de style spécifique.

La grammaire XML proposée permet de définir un format d'échange unique pour les 5 langages graphiques ou textuels (LD, SFC, FBD, IL, ST) conformes à la norme IEC1131-3. Les données de l'application d'automatisme vont aussi être décrites en langage XML et pourront ainsi être facilement importées ou exportées vers différents logiciels tiers (CAO électrique, Supervision, ...).

Les fichiers en langage XML pourront être transformés vers d'autres fichiers en langage XML ayant une grammaire différente, grâce à un mécanisme (XSLT : eXtensible Stylesheet Language Transformation) de feuilles de style. Il sera par exemple très facile de faire une passerelle entre les données d'une application d'automatisme et un logiciel tableur comme EXCEL de Microsoft Corporation.

Les parties d'application générées en langage XML pourront être visualisées par des utilitaires de recherche, visualisation, édition (browsers) de la toile WEB (Internet Explorer par exemple), ceux-ci incluant de base des afficheurs de XML. C'est un autre avantage de la solution proposée que d'offrir une grammaire formelle pour échanger des données d'automatisme. La solution proposée ici offre donc de multiples avantages pour échanger des données de l'automatisme.

D'autres particularités et avantages de la présente invention apparaîtront plus clairement à la lecture de la description ci-après faite en référence aux dessins annexés dans lesquels :
- la figure 1 représente une vue schématique d'une station de programmation équipée d'un gestionnaire XML pour importer ou exporter des fichiers de description d'une application du langage unique vers un des langages graphiques,
- la figure 2 montre un exemple d'organisation en mémoire de la grammaire permettant de décrire une application d'automatisme dans le langage unique selon l'invention,
- la figure 3 représente un composant logiciel qui constitue un générateur d'index de balises pour produire des fichiers d'index,
- la figure 4 détaille le processus de compression d'un fichier de description vers un fichier compacté.

L'invention consiste à décrire une application d'automatisme grâce à un langage unique, hiérarchisé et orienté objet, suivant une grammaire de ce langage définie spécifiquement pour traduire l'application d'automatisme formulée dans un ou plusieurs langages graphiques d'automatisme conformes à la norme IEC1131-3 et à mémoriser dans l'équipement d'automatisme un fichier compacté issu de cette description. Dans le mode de réalisation présenté, ce langage unique, hiérarchisé et orienté objet est par exemple le langage XML (eXtended Markup Language). La description est uniquement textuelle (aucune information binaire). Elle est indépendante de l'implémentation et doit respecter les standards XML. La description XML d'une application d'automatisme pourra être stockée en tout ou partie sous forme d'un ensemble d'un ou plusieurs fichiers de description. Ces fichiers pourront être importés et/ou exportés vers des logiciels tiers. A chaque objet descriptif de l'application en langage XML est attribué, d'une part des balises XML (Tags) qui sont des mots encadrés par des signes "inférieur" (<) et "supérieur" (>) et d'autre part des attributs (de la forme *nom="valeur"*). L'application entière peut donc être décrite à l'aide des balises et des attributs. Les balises sont utilisées seulement pour délimiter les éléments de données et laissent l'entière interprétation des données à l'application qui les lit. Ces balises sont constituées par des mots compréhensibles même pour un utilisateur non expert dans le domaine.

Habituellement, une application d'automatisme est décrite par plusieurs fichiers de description comportant un fichier de description du programme d'application, un fichier de description des entrées-sorties de l'application et un fichier de description des données de l'application.

Une grammaire spécifique à la traduction en langage XML d'une description d'un programme d'application en langage graphique Ladder est définie en annexe 1.

La description en langage Ladder est structurée en réseaux de contacts : chaque réseau est décrit ligne par ligne du haut vers le bas. Chaque ligne est décrite de la gauche vers la droite. Chaque ligne commence au rail gauche (à gauche de la représentation du réseau Ladder) et se termine sur le dernier élément graphique décrit. Chaque ligne contient une liste d'éléments graphiques standards du langage Ladder : contacts, bobines, lien horizontal, lien vertical, bloc fonction, etc... Les coordonnées graphiques sont relatives à la position des objets dans la grille de lignes et de colonnes de représentation d'un graphique.

La ligne 10 de la grammaire représentée à l'annexe 1, correspondant à une représentation graphique d'une application en langage Ladder, définit qu'une application "LDSource" en Ladder est constituée d'un réseau Ladder (networkLD) et de zéro à n (indiqué par le signe *) boîtes de texte (textBox) définies aux lignes 59 à 61. Un réseau Ladder (networkLD) est constitué d'une ou plusieurs (indiqué par le signe +) lignes type (typeLine) et d'un lien avec zéro à n blocs fonction (FBLink). Le lien avec au moins un bloc fonction (FBLink) est constitué comme indiqué ligne 50 de l'annexe 1 de deux objets de position (objPosition) définissant par leurs coordonnées une position de départ correspondant à l'attribut "depuis" (from, ligne 51) et une position d'arrivée correspondant à l'attribut "vers" (to, ligne 52). L'objet ligne type (typeLine) est constitué, comme indiqué à la ligne 13 de l'annexe 1, de zéro à n d'une combinaison des objets suivants : soit d'une ligne vide (emptyLine), soit au choix d'un contact (contact), d'un lien horizontal (Hlink), d'un lien vertical (Vlink), d'une bobine (coil), d'un contrôle (control), d'un court-circuit (shortCircuit), d'une cellule vide (emptyCell), d'un appel de bloc fonction (calls), d'une expression FFB (FFBExpression), d'un bloc de comparaison (compareBlock) et d'un bloc d'opération arithmétique (operateBlock).

L'objet ligne type (typeLine) a un attribut label qui est du texte. L'objet contact qui est défini à la ligne 18, a pour attribut le type de contact qui définit le contact : ouvert, fermé, montant, descendant sous forme d'énumération (openContact, closedContact, Pcontact, Ncontact) et le nom de la variable de contact (ContactVariableName) qui est du type texte. La ligne 23 définit l'objet lien horizontal (HLink) qui a pour attribut un nombre de cellules (numberCell) traversées par le lien horizontal (HLink). Les lignes 26 et 27 de l'annexe 1 définissent l'objet bobine (Coil) qui peut être de type bobine simple (coil), bobine inverse (notCoil), bobine de mise à un (setCoil), bobine de mise à zéro (resetCoil), bobine de franchissement de transition (hashCoil) utilisée uniquement en association avec le langage SFC, bobine à front montant (Pcoil), bobine à front descendant (Ncoil), ainsi que le nom de la variable bobine (coilVariableName) qui est du type texte. L'objet contrôle (control) définit, aux lignes 35 à 37, le type de commande à saut (jumpCoil) ou à retour (retCoil). L'objet court-circuit (shortCircuit) est défini ligne 38 comme la combinaison des objets lien vertical (Vlink) et au choix un des éléments suivants : lien horizontal (Hlink), contact (contact), bobine (coil), appels (calls), bloc de comparaison (compareBlock). Un bloc appel (calls), comme défini ligne 39, contient une instance d'un objet (instanceObj), un type de paramètre (typeParam) et une description d'appel (descriptionCall). Le type de paramètre (typeParam) et la description d'un appel (descriptionCall) peuvent être renseignés ou non, car facultatif comme indiqué par le signe ?, de valeurs différentes. La valeur de type de paramètre est définie ligne 41 comme étant la valeur booléenne "0" ou "1" (enEn0). La ligne 43 définit la description d'un appel (descriptionCall) comme étant constituée d'une liste d'entrées (inputListFBD) de bloc fonction (FBD) qui sont des listes de paramètres formels et de paramètres effectifs (voir lignes 45 et 46) et d'une liste de sorties (outputListFBD) de bloc fonction (FBD). Les boites de texte sont définies par la position de l'objet boite de texte et par ses dimensions en hauteur et en largeur.

Chaque programme d'application pour des sections écrites en langage Ladder pourra ainsi être décrit en utilisant la grammaire correspondante au langage graphique Ladder. Chaque grammaire permet de définir une hiérarchie entre objets et de représenter une application d'automatisme sous forme d'une arborescence graphique (30) dans la mémoire vive de la station de programmation.

Ainsi, comme on peut le voir sur l'annexe 1, la racine de l'arbre est constituée par l'application source (LDSource) à laquelle sont rattachés un ou plusieurs fils qui sont le réseau (networkLD) et éventuellement une ou plusieurs boites de texte (textBox). Le réseau a un ou plusieurs fils constitués d'objets du type ligne (typeLine) et du type lien FB (FBLink). L'objet de type ligne (typeLine) a pour fils la ligne vide (emptyLine) ou un des éléments suivants : contact (contact), lien vertical (HLink), lien horizontal (VLink), bobine (coil), commande (control), court-circuit (shortCircuit), appels (calls), comparaison de blocs (compareBlock), exécution de bloc (operateBlock), expression FFB (FFBExpression).

Une grammaire spécifique à la traduction en langage XML d'une description d'une application en langage graphique SFC est définie en annexe 2.

La ligne 11 de la grammaire représentée à l'annexe 2 définit que la description en langage SFC d'une application (SFCSource) comprend un en-tête (SFCHeader) et est structurée en pages (SFCPage) qui correspondent aux pages d'écrans affichées par un éditeur de langage SFC. L'entête (SFCHeader) a pour attribut la tâche (task) et le nom du graphe (graphName). Chaque page peut contenir un ou plusieurs réseaux SFC (networkSFC). Chaque réseau contient une liste d'éléments "objet" choisis parmi les éléments graphiques standards suivants du langage SFC : étapes (step), sauts (jump), transitions (transition), liens entre étapes et transition (SFCLinkObject), commentaires (commentSFC), liens entre graphes (linkSFC). Les coordonnées graphiques des différents objets de type saut, étape ou transition sont définies par un objet de type position (objPosition) définissant la position de l'objet respectif (saut, étape ou transition) dans la grille en ligne /colonne. Un objet de type étape (step) est défini par une ou plusieurs actions dont les attributs sont définis lignes 23 et 24 de l'annexe 2. Les transitions sont définies également par des conditions de transition (transitionCondition) en ligne 28. Les objets du type liens entre graphes (linkSFC) sont constitués de deux objets de position (objPosition) définissant par leurs coordonnées une position de départ correspondant à l'attribut "depuis un type d'objet" (typeObjectFrom), ligne 45, et une position d'arrivée correspondant à l'attribut "vers un type d'objet" (typeObjectTo), ligne 54. Chacun de ces deux attributs est choisi parmi un des objets suivants : étape initiale (initialStep), étape (step), macro étape (macroStep), étape interne (stepin), transition (transition), branche A (Abranch), branche P (Pbranch), jointure A (Ajoint), jointure P (Pjoint) et pour l'attribut "vers" également entre les objets précédents et l'objet saut (jump).

La hiérarchie du langage SFC est la suivante. L'arborescence a pour racine l'objet source (SFCSource) qui a lui-même pour fils l'entête (SFCHeader) et la page (SFCPage). La page a pour fils le réseau (networkSFC), lequel réseau a pour fils l'étape (step), le saut (jump), la transition (transition), le lien objet SFC (SFCLinkObject), le commentaire SFC (commentSFC), le lien entre graphes SFC (linkSFC).

De manière similaire, une grammaire spécifique à la traduction en langage XML d'une description d'une application en langage graphique FBD est définie en annexe 3.

Chaque réseau en langage FBD contient une liste d'éléments graphiques standards du langage FBD : des blocs fonctions (FFBBlock), des boîtes de texte (textBoxFBD), des labels (labelObject), des commentaires (commentObjectFBD), des liens entre blocs (linkFBD) et des instructions de saut (jumpObject). Chaque élément est défini conformément aux lignes 13 à 39 de l'annexe 3. Les coordonnées graphiques sont relatives à la position des objets dans la grille en ligne / colonne.

La hiérarchie entre objets définie dans cette grammaire est la suivante. La racine est constituée par la source FBD (FBDSource), laquelle est constituée d'un ou plusieurs réseaux FBD (networkFBD). Chaque réseau est constitué de l'un ou plusieurs des éléments fils suivants : le bloc (FFBBlock), la boîte de texte (textBoxFBD), l'étiquette (labeLObject), le saut (jumpObject), le commentaire (commentObjectFBD), le lien (linkFBD).

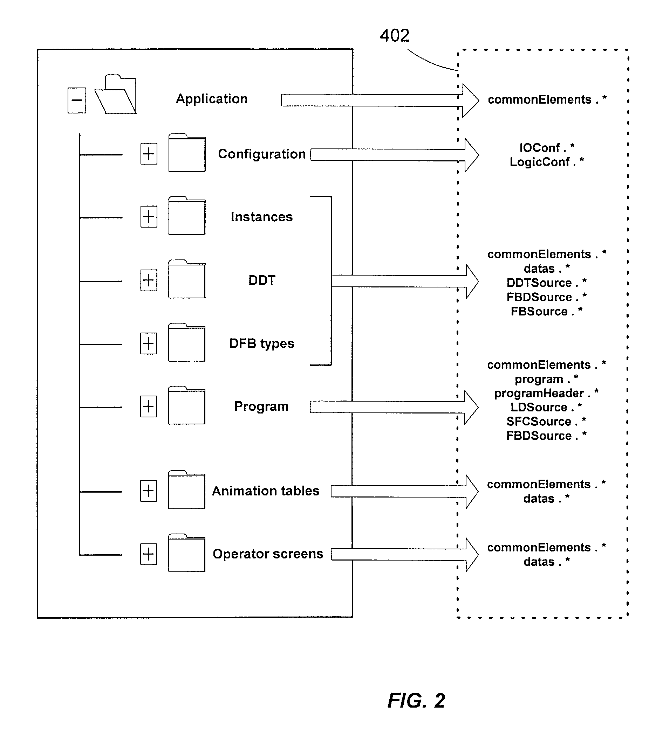

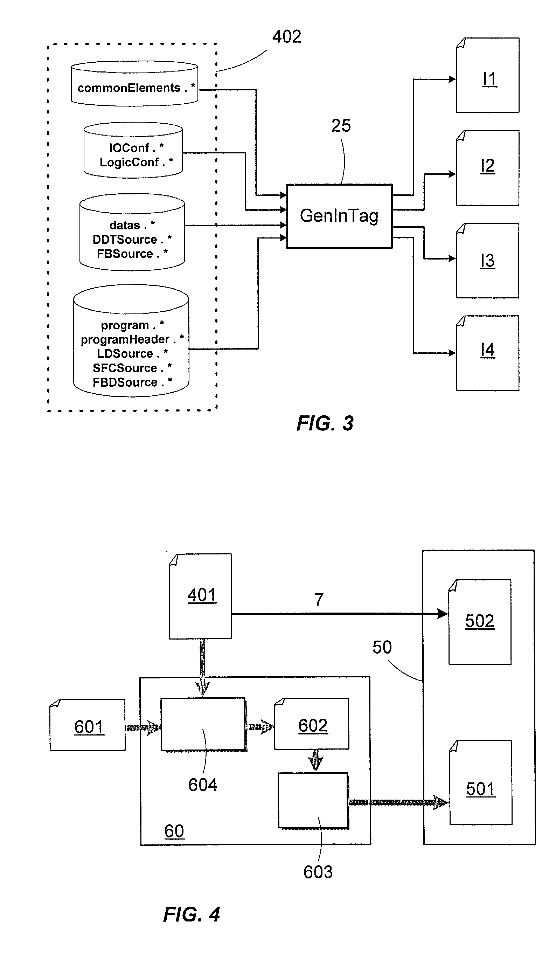

Les fichiers (402, fig.2) descriptifs de la grammaire sont organisés de la manière suivante. Une application d'automatisme peut se décomposer principalement en trois parties : son programme, ses données et ses entrées/sorties. La grammaire de chacune de ces parties est décrite, selon l'invention, dans un fichier de "Définition du Type de Document" (ou Document Type Definition) de la forme ".dtd" (par exemple : program.dtd pour le fichier programme d'application, datas.dtd pour le fichier données, IOConf.dtd pour le fichier de configuration des entrées/sorties) ou dans un fichier "Schéma" de la forme ".xsd". Par la suite, on parlera de fichiers ".dtd" mais ils pourront être remplacés de façon équivalente par des fichiers ".xsd". Ainsi, dans les figures 2 et 3, lorsque la notation de type "datas.*" est utilisée, cela signifie qu'il s'agit d'un fichier de données qui peut être de type "datas.dtd" ou "datas.xsd". Chacune des parties du programme d'application pouvant elle-même se décomposer en sous-parties faisant elles-mêmes l'objet d'un fichier descriptif en ".dtd". A titre d'exemple, le fichier programme (program.dtd) pourra inclure les fichiers source (LDSource.dtd, SFCSource.dtd et FBDSource.dtd, comme cela est représenté à la figure 3) qui contiennent les grammaires des différents langages graphiques de type schémas à contacts Ladder (LD), diagrammes fonctionnels en séquence (SFC) et blocs fonctions (FBD).

Les fichiers ".dtd" ou ".xsd" sont des fichiers spécifiques au constructeur et contiennent la description des différentes grammaires. Ainsi le dossier "Application" (figure 2) comprend le fichier (commonElements.*) qui contient les éléments communs à l'application d'automatisme, à savoir le nom de l'application, la date de réalisation de l'application ou de la version, le numéro de version et des commentaires. Le dossier "Configuration" contient les fichiers de configuration respectivement des entrées/sorties (IOConf.*) et de la configuration logique (LogicConf.*). Les dossiers "Instance", "DDT" et "DFB types" contiennent la description des données, instance, DDT, FB type sous forme des fichiers (datas, DDTSource.*, FBSource.*). Le dossier "Program" contient les fichiers sources (LDSource.*, SFCSource.* et FBDSource.*) qui contiennent respectivement la description de chaque grammaire respective à chaque langage graphique usuel en matière d'automatisme décrites respectivement aux annexes 1 à 3. Le dossier "Animation tables" contient la description des tables d'animation qui est constituée en partie des fichiers des éléments communs (commonElements.*) et des données (datas.*). Le dossier "Operator screens" contient les descriptions des écrans d'exploitation constituées des fichiers des éléments communs (commonElements.*) et des données (datas.*). Ces différents fichiers de grammaire, du type ".dtd", définissent la structure des fichiers XML. Un fichier XML d'une application représente une instance de la grammaire définie dans le fichier ".dtd" correspondant. Les fichiers de description XML (401) sont eux spécifiques de l'application d'automatisme considérée. Le principe de correspondance entre ces deux types de fichiers est défini par la norme XML V1.0 conformément au modèle objet du document DOM (Document Object Model). Le modèle objet du document DOM est un ensemble d'appels de fonctions standard pour manipuler des fichiers XML à partir des langages graphiques d'automatisme du constructeur.

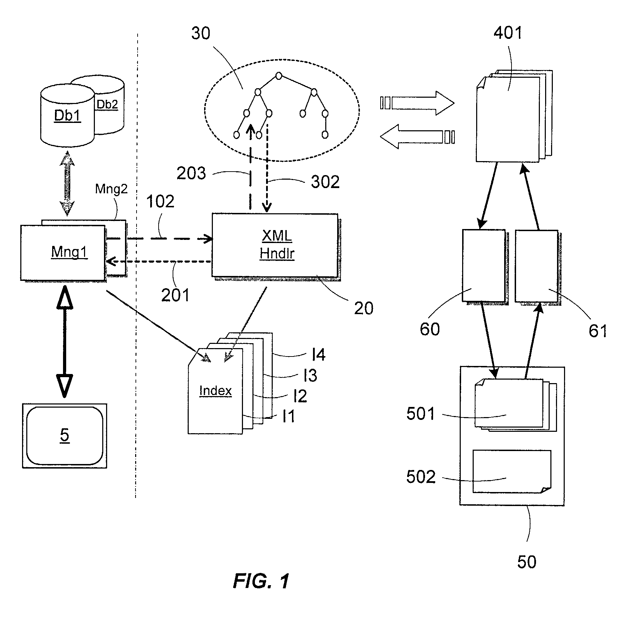

La correspondance entre les fichiers XML et les bases de données de l'application est la suivante :
Une application d'automatisme est stockée en binaire sur une station de programmation connectable à un équipement d'automatisme. Cette application d'automatisme selon l'art antérieur était mise au point par l'utilisateur qui se servait d'un éditeur (5) pour des langages graphiques IEC1131-3, utilisant un composant logiciel dénommé par la suite gérant (Mng1,Mng2,...) pour ranger les saisies utilisateurs, dans plusieurs bases de données : par exemple, une base de données (Db1) pour le programme d'application, une base de données (Db2) pour les données de l'application et une base de données (Db3) pour la configuration des entrées/sorties de l'application, (Db1) et (Db2) étant représentées sur la figure 1. La description de l'application en langage XML selon l'invention est complètement indépendante de son implémentation dans de telles bases de données constructeurs. Pour assurer cette indépendance, un composant logiciel particulier a été développé; il constitue un générateur automatique d'index de balises (Tag) représenté sur la figure 3 et est dénommé ci-après composant GenlnTag (25).

Le composant logiciel GenInTag (25) générateur d'index de balises doit être exécuté pour produire des fichiers d'index qui permettent de faire la correspondance entre l'arborescence graphique XML (30) représentative de l'application d'automatisme dans le langage de l'invention et les structures des bases de données (Db1,Db2). Ce composant GenInTag extrait les mots clés (éléments et attributs) des différents fichiers (402) qui définissent les grammaires XML (".dtd") pour le programme, les données, la configuration d'entrées-sorties en langage XML, afin de générer des index organisés selon plusieurs fichiers, par exemple quatre fichiers (11,12,13,14) dans la figure 3, contenant chacun un ou plusieurs fichiers de constantes d'index utilisés par les différents gérants (Mng1,Mng2,...). Le composant GenInTag lit les fichiers de définition du type de document ".dtd" -ou de schéma ".xsd"- et génère les différents fichiers d'index. Ces fichiers d'index réalisent la correspondance qui permet d'utiliser les bases de données (Db1, Db2) de description des applications selon l'art antérieur. Ils sont stockés dans une mémoire non volatile de la station de programmation.

La station de programmation incorpore dans une mémoire non volatile un programme gestionnaire XML Hndlr (20) -en anglais XML Handler-. Le gestionnaire XML Hndlr (20) est un composant logiciel développé en langage C++, utilisable au travers d'une interface COM. Il encapsule et utilise les services d'un analyseur Prsr DOM -en anglais Parser DOM- et offre des services de haut niveau pour la gestion de l'arborescence graphique XML (30). Le gestionnaire XML Hndlr (20) permet à la station de programmation de fabriquer l'arborescence (30) représentative de l'application à partir des fichiers de description (401) et en utilisant les fichiers de grammaire (402) ou de fabriquer cette arborescence à partir des demandes des gérants (Mng1,Mng2,...) des bases de données de l'application. Il utilise les différents gérants qui appellent les services du gestionnaire XML Hndlr (20) en utilisant les fichiers d'index (|1 à |4) générés par le composant GenInTag (25). Comme représenté à la figure 1, chaque partie d'une application, par exemple programme d'application (Db1) données de l'application (Db2), est gérée par un gérant spécifique (par exemple Mng1 pour le programme d'application, Mng2 pour les données). Le gestionnaire XML Hndlr (20) comporte en plus de l'analyseur Prsr DOM qui est un composant logiciel en langage C⁺⁺, une routine d'exportation et une routine d'importation.

La routine d'exportation écrit, dans un fichier XML, les informations de l'application d'automatisme et la routine d'importation lit dans un fichier XML les informations de l'application d'automatisme. Chacun des gérants dialogue avec les différents services du gestionnaire XML Hndlr (20). Les gérants spécifiques (Mng1,Mng2,...) utilisent les fichiers index (|1 à |4). La routine d'exportation incorpore, dans une variante avantageuse de l'invention, un programme de compression (60) pour générer une forme compactée (501) du fichier XML de données (401), une fois le fichier XML produit. La station de programmation utilise alors un programme de chargement afin de mémoriser dans la mémoire (50) de l'équipement d'automatisme chaque fichier compacté (501) généré.

Ainsi, de par sa forme compactée (501), l'application d'automatisme en langage source occupera moins de place mémoire et pourra être embarquée en totalité sur l'équipement d'automatisme, alors que dans l'art antérieur il n'était pas possible d'embarquer la totalité de l'application en langage source sur l'équipement d'automatisme pour des raisons de taille mémoire occupée par l'application en langage source. De plus, comme représenté en figure 4, le fichier compacté (501) est mémorisé dans la mémoire (50) de l'équipement d'automatisme en même temps que le fichier des données binaires (502) résultant d'une compilation classique du fichier XML (401) par un compilateur (7) de la station de programmation. Le fichier (502), issu de cette compilation, est directement exploitable par le système d'exploitation propriétaire de l'équipement d'automatisme.

Seule l'application en langage objet (propriétaire) avait une taille compatible avec les ressources mémoires de l'équipement d'automatisme et une application en langage objet n'est pas exploitable par une station de programmation sans nécessiter au préalable une décompilation par un décompilateur correspondant au langage propriétaire du système d'exploitation. Il n'était donc pas possible, pour une station de programmation vierge, de pouvoir se connecter à un équipement d'automatisme et de pouvoir récupérer une application d'automatisme décrite en langage graphique. Ainsi, par la combinaison de l'utilisation des grammaires en langage XML et des feuilles de style de compactage, il est possible de générer un ou plusieurs fichiers compactés (501) descriptif de l'application qui soient d'une taille suffisamment faible pour pouvoir être embarqué sur l'équipement d'automatisme en même temps que le fichier exécutable (502). Chaque fichier (501) peut être déchargé sur une station de programmation pour être décompressé et ensuite exploité par tout logiciel utilisant le langage XML.

Le programme de compression (60) effectue la compression en deux étapes, comme indiqué en figure 4 :
- une première étape de réduction de balises grâce à un mécanisme (604) de transformation (processeur XSLT : eXtensible Stylesheet Language Transformation) des balises du fichier XML (401) par application à ce fichier XML d'une feuille de style au standard XSL (eXtensible Stylesheet Language). Cette feuille de style spécifique XSL (601), spécialement construite pour les besoins de l'invention, est décrite partiellement à titre d'exemple dans l'annexe 6. Elle permet de réduire la longueur des noms de balises et donc de fournir pour chaque balise du fichier XML (401) une traduction en langage XML réduit. L'application de cette feuille de style s'effectue dans la station de programmation et fournit en sortie un fichier XML réduit (602), mémorisé temporairement pour être exploité ensuite par un algorithme de compactage qui s'exécute sur la station de programmation. L'annexe 4 donne un exemple de fichier XML (401) et l'annexe 5 donne le même exemple sous la forme d'un fichier XML réduit (602).
- une deuxième étape de déroulement d'un algorithme de compactage (603), tel que notamment celui commercialisé sous la dénomination "Xmill", adapté à des documents en langage XML. Cet algorithme permet ainsi d'aboutir, à partir du fichier XML réduit (602), à un fichier compacté (501). Un tel algorithme de compactage tire profit de la connaissance des règles du langage XML, notamment celles inhérentes aux documents XML en particulier les règles vis-à-vis des balises (balise de début, balise de fin, non-imbrication des balises) pour optimiser la compression.

Comme indiqué ci-dessus, l'annexe 6 ne comporte qu'un fragment d'une feuille de style spécifique (601) suffisant pour comprendre le mécanisme de réduction de la taille des balises d'un fichier XML. En ne prenant que quelques exemples choisis dans la partie représentée en annexe 6, la balise "company" sera ainsi réduite en balise "c1" (voir page 27 lignes 68-70) par application de cette feuille de style. De même, la balise "dateTime" sera réduite en balise "d2" (voir page 28 lignes 37-39), la balise "address" sera réduite en balise "a2" (voir page 29 lignes 12-14), etc... Ainsi, toutes les balises d'un fichier XML peuvent être réduites de façon similaire afin d'optimiser facilement la taille d'un fichier XML réduit. Dans l'annexe 4, par exemple, les lignes 10-11 de la page 21 comportent les balises "company" et "dateTime" qui sont respectivement réduites, dans l'annexe 5 aux lignes 8-9 de la page 24, par les balises "c1" et "d2". Dans ces annexes 4 et 5, la position d'un objet par rapport au début de la ligne définit, par son retrait, la dépendance hiérarchique de cet objet.

Réciproquement, la routine d'importation incorpore, dans une variante avantageuse de l'invention, un programme de décompression (61), pour générer une forme décompactée en langage XML d'un fichier de description (401), à partir d'un fichier XML compacté (501) mémorisé dans la mémoire (50) de l'équipement d'automatisme. Le programme de décompression (61) comporte une étape de déroulement de l'algorithme de décompactage (603) adapté aux fichiers XML pour obtenir un fichier au format XML réduit (602), puis une étape de recréation des balises d'origine (Tags) grâce au mécanisme de transformation (604) par application de la feuille de style (601) au fichier XML réduit (602).

L'application mémorisée sur la station de programmation dans un fichier de description XML (401) est modélisée par le gestionnaire XMLHndIr (20) sous forme d'arborescence (30) en utilisant d'une part les informations réparties dans la mémoire de la station de programmation dans des bases de données (Db1, Db2,...) et sous forme de fichier binaire, et d'autre part les index créés par le composant GenInTag (25) pour accéder à ces informations et les représenter sous forme arborescente. Dans le sens import, l'arborescence est reconstituée à partir du fichier source XML (401) et des fichiers de grammaire XML (402). Dans le sens export, ils sont constitués par les fichiers de grammaire XML. Le gestionnaire XML Hndlr (20), comme représenté à la figure 1, communique par des notifications avec les gérants (Mng1, Mng2,...) des bases de données (Db1, Db2,...) et avec le module de gestion de l'arborescence.

Ainsi lors de l'export, un gérant (Mng1) peut émettre une notification (102) «CreateNode (index, value)» demandant au gestionnaire XML Hndlr (20) de créer un noeud ayant un index déterminé et une valeur déterminée. Le gestionnaire XML Hndlr (20), en utilisant les valeurs d'index et les fichiers de grammaire (402) va demander au module de gestion de l'arborescence de créer, par une notification (203) «CreateNode (tagname, value)», un noeud ayant pour nom de balise le nom défini par «tagname» et pour valeur, la valeur désignée par «value». En sens inverse, lors de l'import, le gérant (Mng1) demande au gestionnaire XML Hndlr (20) de lui envoyer les informations concernant un noeud par une notification (201) «GetNode (index,value)». Le gestionnaire XML Hndlr (20) recevant cette notification examine dans les tables de correspondance constituées par les fichiers d'index (|1 à |4), l'index et le nom de balise (Tag) correspondante. Le gestionnaire XML Hndlr (20) demande alors au module de gestion de l'arborescence de lui envoyer une notification (302) «GetNode (tagname,value)».

Le gestionnaire (20) ainsi défini, permet, par son installation sur une station de programmation et en association avec les fichiers de grammaire en langage XML, de décrire une application d'automatisme très facilement éditable puisque les fichiers de description en XML de l'application (401) ainsi obtenus sont en ASCII et peuvent donc être édités et modifiés grâce à n'importe quel éditeur de texte. Ceci permet d'éviter d'avoir des programmes spécifiques de visualisation des langages graphiques spécifiques aux applications d'automatisme.

L'invention présente aussi l'avantage de permettre d'exploiter les anciens programmes d'automatisme déjà développés en convertissant (exportation) ces programmes formulés dans des bases de données (Db1, Db2,...) en fichiers XML.

Enfin, le gestionnaire XML Hndlr (20) présente également l'avantage de pouvoir exporter un fichier de description d'une application développée en langage XML dans une application utilisant un des langages graphiques (LD, SFC, FBD) de description d'un automatisme utilisé jusqu'à présent.

L'invention concerne aussi un équipement d'automatisme comprenant une mémoire (50) contenant le programme d'application d'automatisme sous la forme d'un fichier binaire (502) exécutable par l'équipement d'automatisme. A partir d'un ou plusieurs fichiers de description (401) descriptifs de toute ou partie de l'application et exprimés dans un langage unique, hiérarchisé et orienté objet, l'équipement d'automatisme mémorise dans la mémoire (50), en plus du fichier exécutable (502), un ou plusieurs fichiers au format compacté (501) issus du ou des fichiers de description (401), dont le contenu reste suffisant à la description de la partie de l'application considérée. Dans le mode de réalisation présenté, ce langage unique, hiérarchisé et orienté objet est par exemple le langage XML (eXtended Markup Language).

Un tel équipement d'automatisme comporte de façon avantageuse des moyens de traduction, tel qu'un module interpréteur, permettant de convertir des fichiers de description (401) de l'application d'automatisme mémorisés en langage XML en un fichier binaire (502) exécutable par l'équipement d'automatisme. Ce module interpréteur a pour fonction de traduire les instructions, décrivant une application d'automatisme, formulées en langage XML, en instructions exécutables par le système d'exploitation propriétaire (proprietary operating system) de l'équipement d'automatisme. De cette façon, on aboutit à un équipement d'automatisme dont le langage de programmation serait accessible à n'importe quel éditeur disponible sur une machine de type PC ce qui permettrait ainsi au concepteur d'automatismes de développer des programmes d'application dont les fichiers seraient mémorisés en ASCII, ceci quel que soit le constructeur de l'équipement d'automatisme et le système d'exploitation utilisé, à condition simplement que l'équipement d'automatisme ait été pourvu du module interpréteur de langage XML en langage binaire propriétaire.

Par ailleurs, l'équipement d'automatisme peut comporter aussi des moyens de décompression permettant de générer, à partir d'un fichier XML compacté (501) mémorisé dans la mémoire (50) de l'équipement d'automatisme, une forme décompactée d'un fichier de description (401) en langage XML. Pour cela, l'équipement d'automatisme exécute un programme de décompression (61) tel que décrit précédemment. Le programme de décompression (61) comporte une étape de déroulement d'un algorithme de décompactage adapté aux fichiers XML, puis une étape de recréation des balises d'origine (Tags) par application d'une feuille de style (601). Le programme de décompression (61) et la feuille de style (601) sont mémorisés dans la mémoire (50) de l'équipement d'automatisme.

De cette façon, une station de programmation vierge peut se connecter directement à un équipement d'automatisme et peut récupérer une application d'automatisme par l'intermédiaire de fichiers de description en langage XML.

Les langages graphiques d'automatisme peuvent ainsi être décrits de façon normalisée en ASCII. Cette normalisation d'une grammaire permet l'échange de programmes d'application entre systèmes d'exploitation (operating system) et des ateliers de programmation de constructeurs différents.

La programmation en XML étant indépendante d'une technologie graphique, indépendante de Microsoft Windows, d'une librairie graphique quelconque, ou encore d'un format graphique (JPEG, BMP ...), l'invention permet la génération de programmes d'application standards pouvant être portés sur les plates-formes différentes. L'invention permet aussi la génération automatique de programmes d'application d'automatisme par des générateurs XML.

Enfin, l'échange de données sous forme de fichier XML avec des logiciels de CAO, CAD, Supervision est facilité par l'invention.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes.

### ANNEXE 1

### Description DTD de la grammaire du langage Ladder

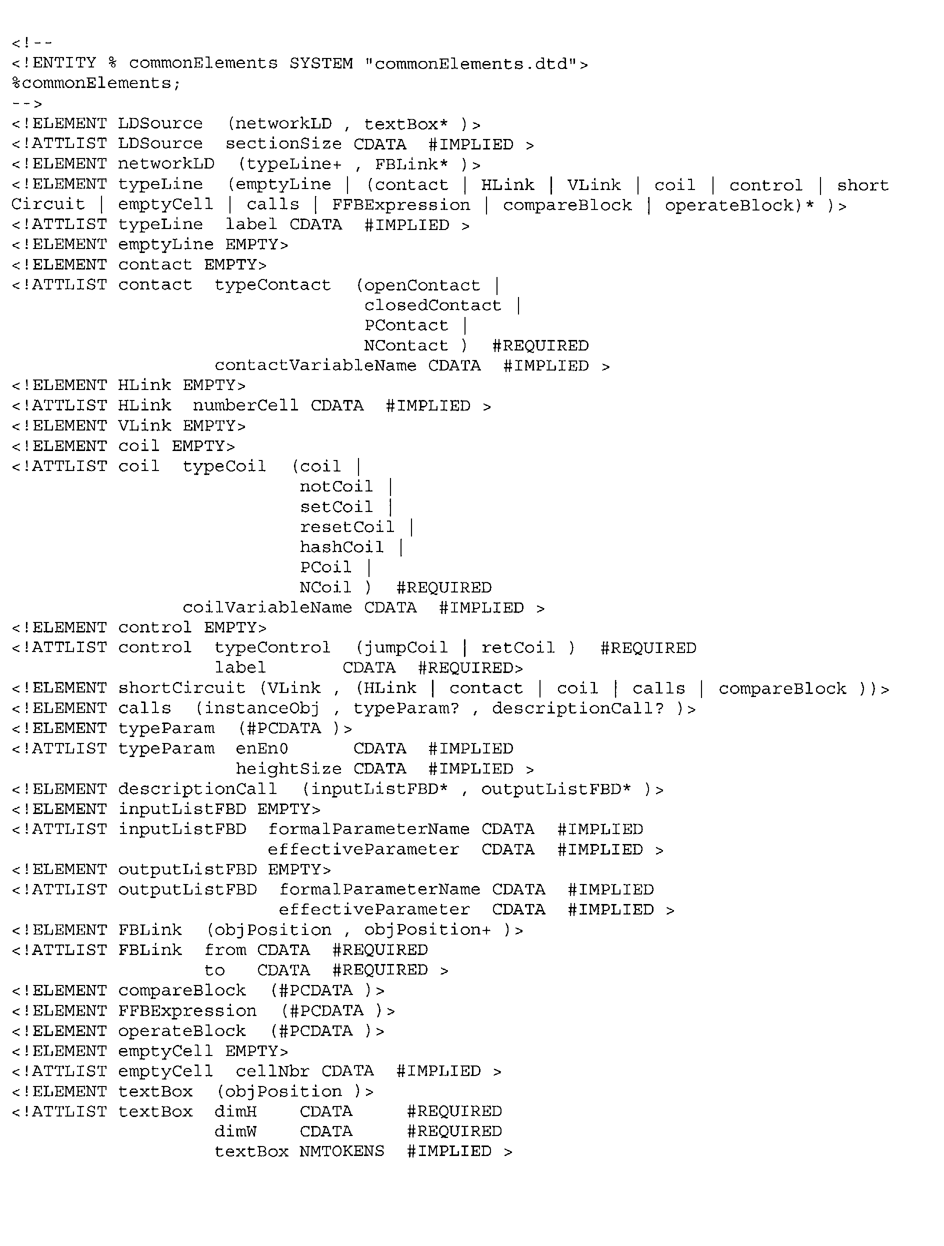

### ANNEXE 2

### Description DTD de la grammaire du langage SFC

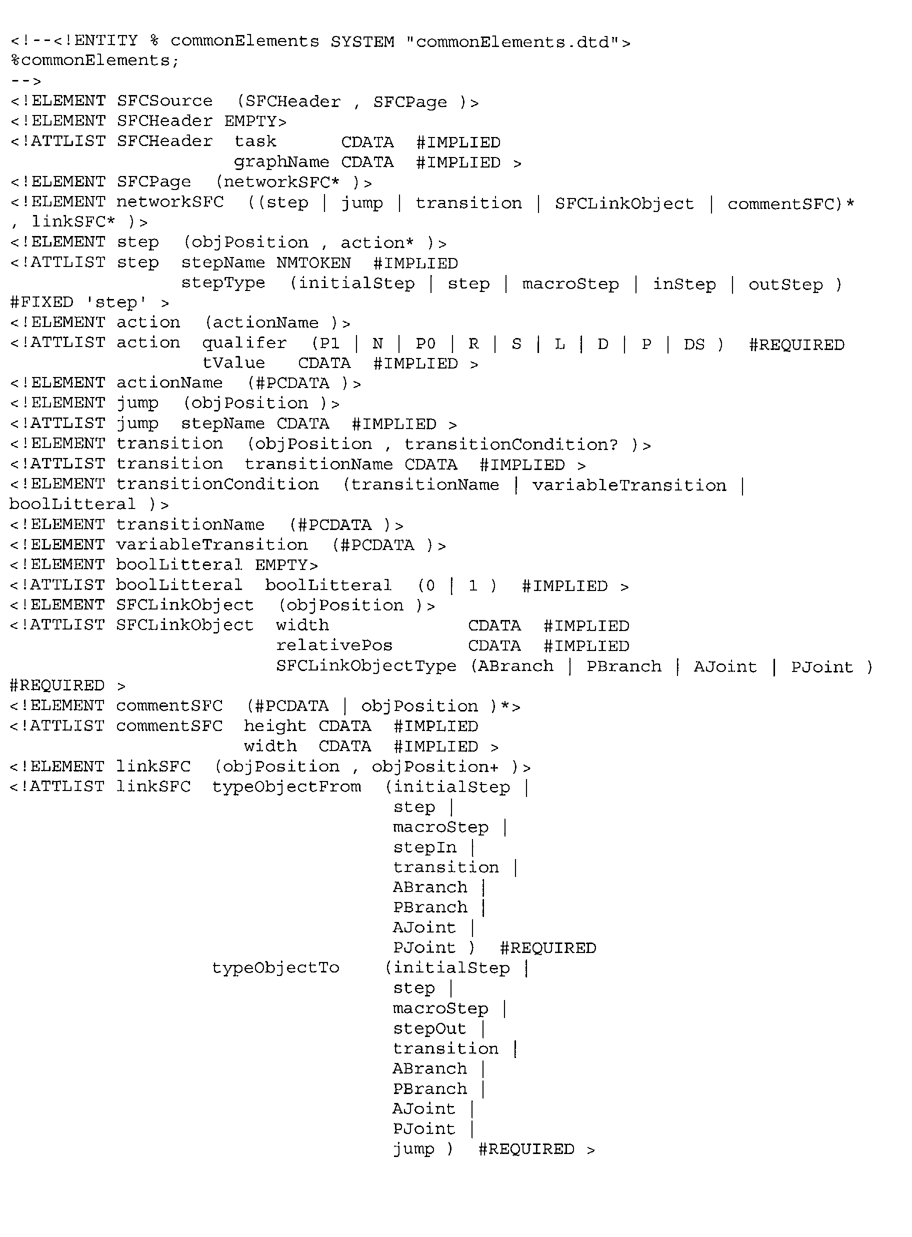

### ANNEXE 3

### Description DTD de la grammaire du langage FBD

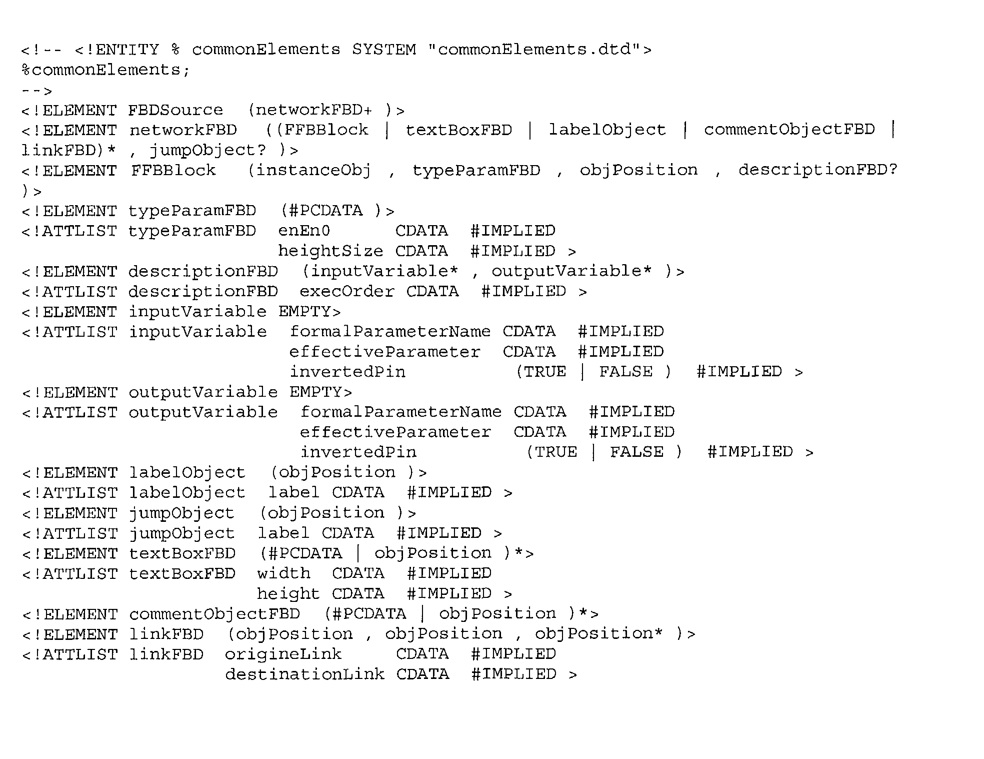

### ANNEXE 4

### Source XML non compacté d'une application d'automatisme donnée

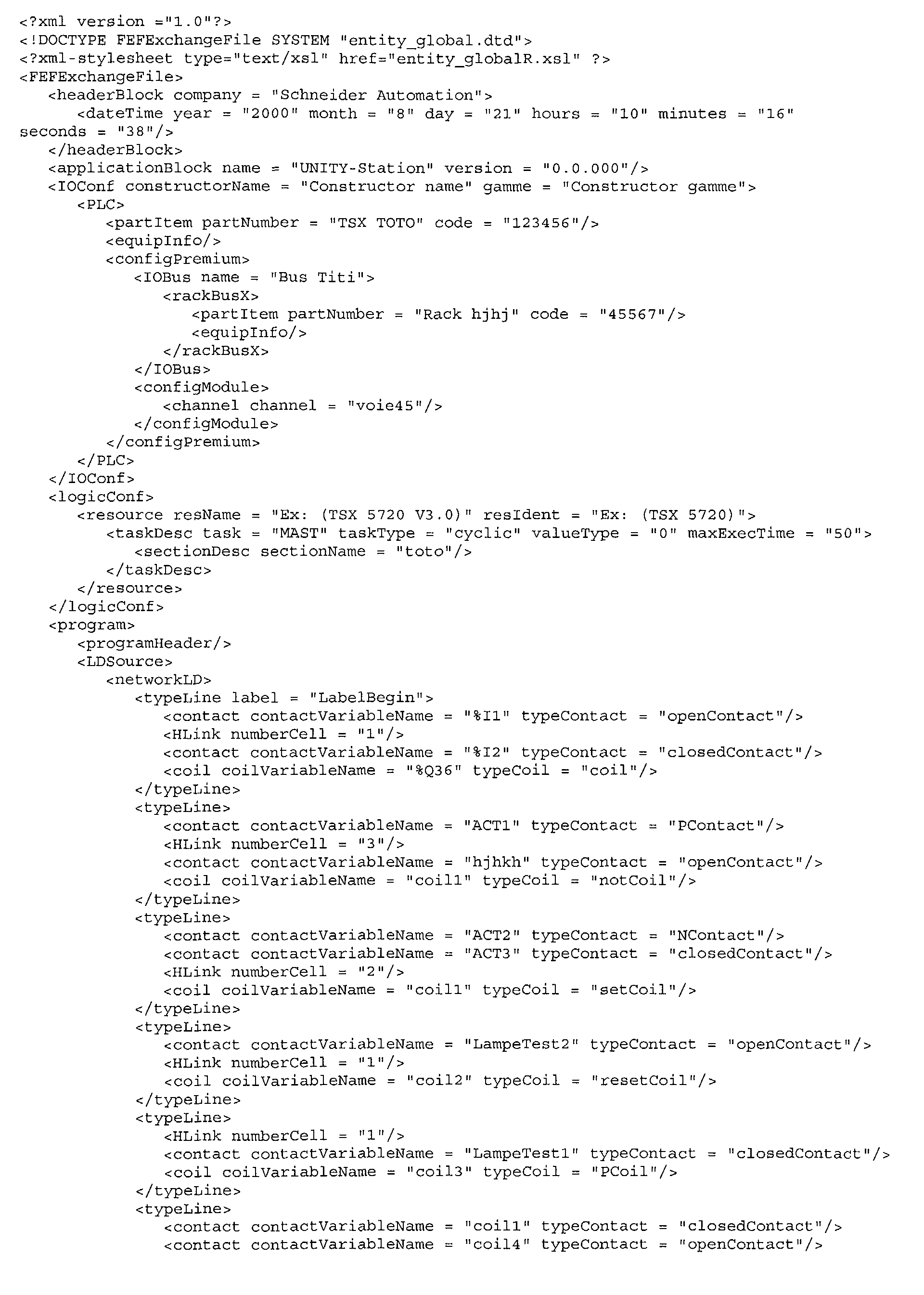

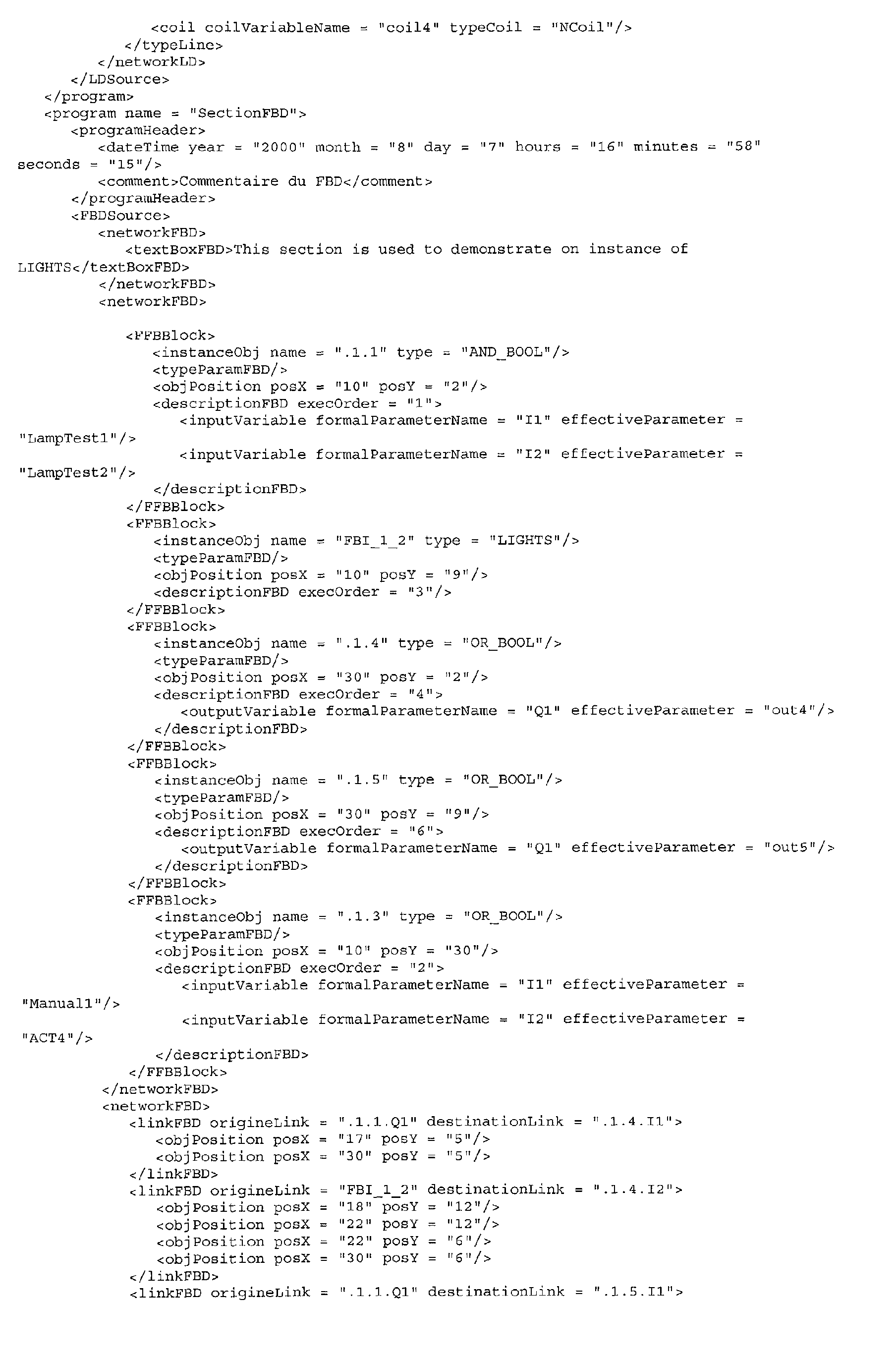

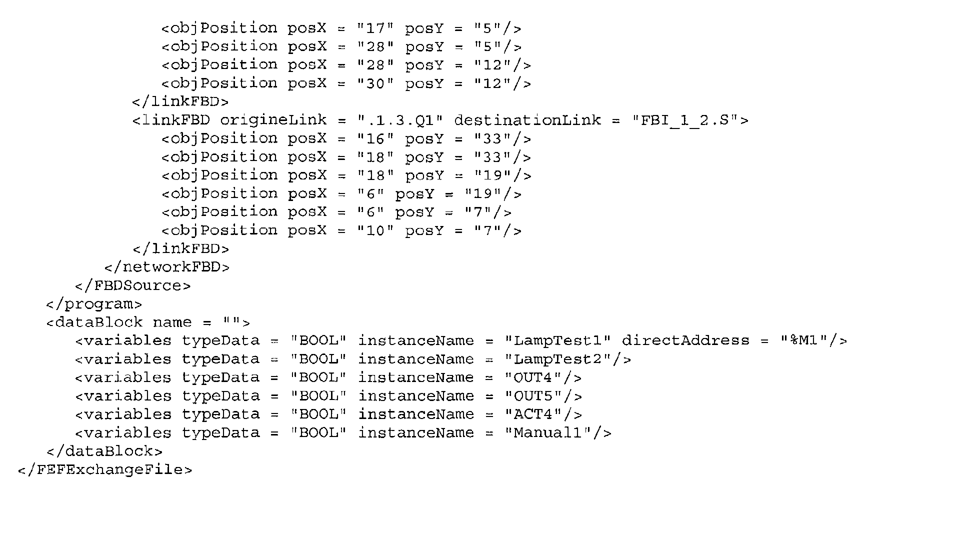

### ANNEXE 5

### Source XML réduit de l'application d'automatisme de l'annexe 4

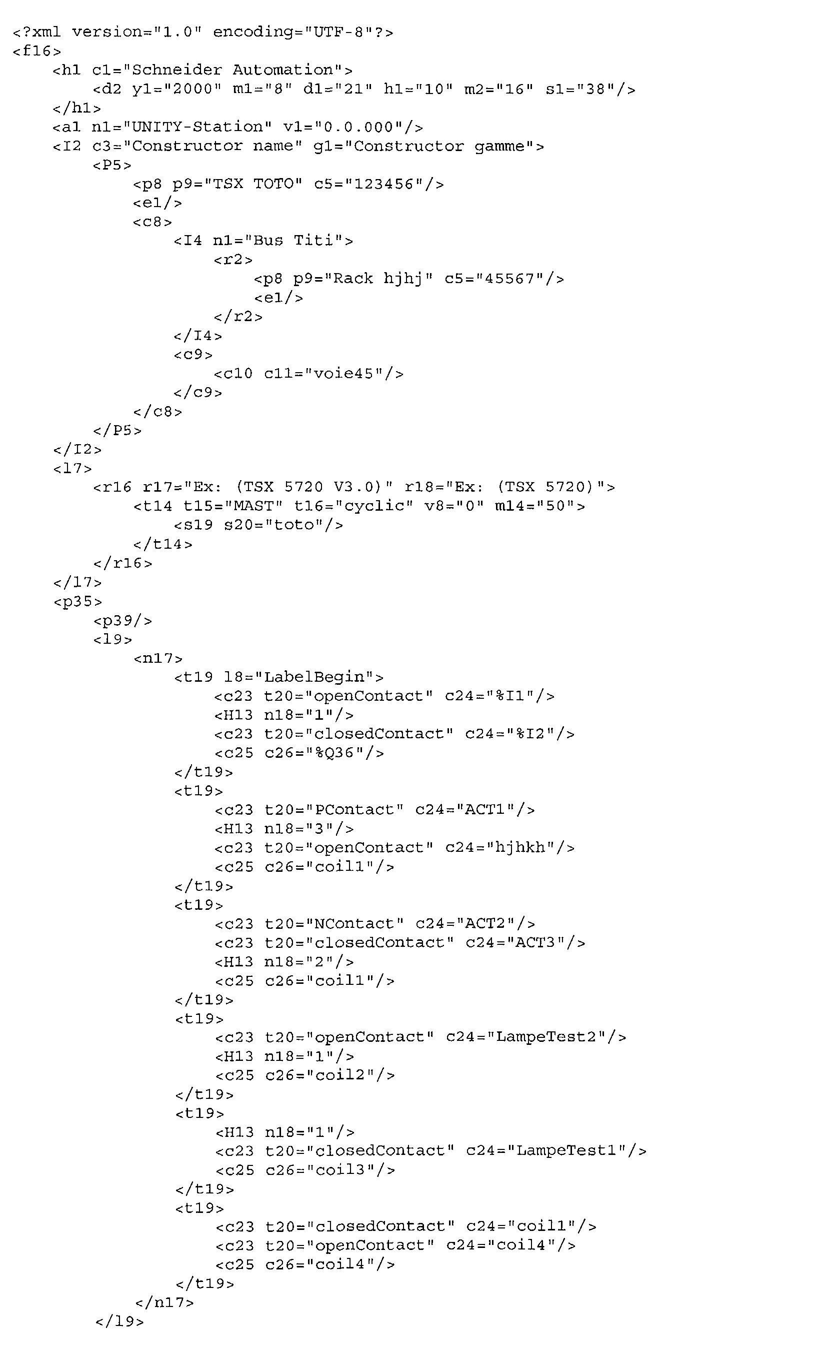

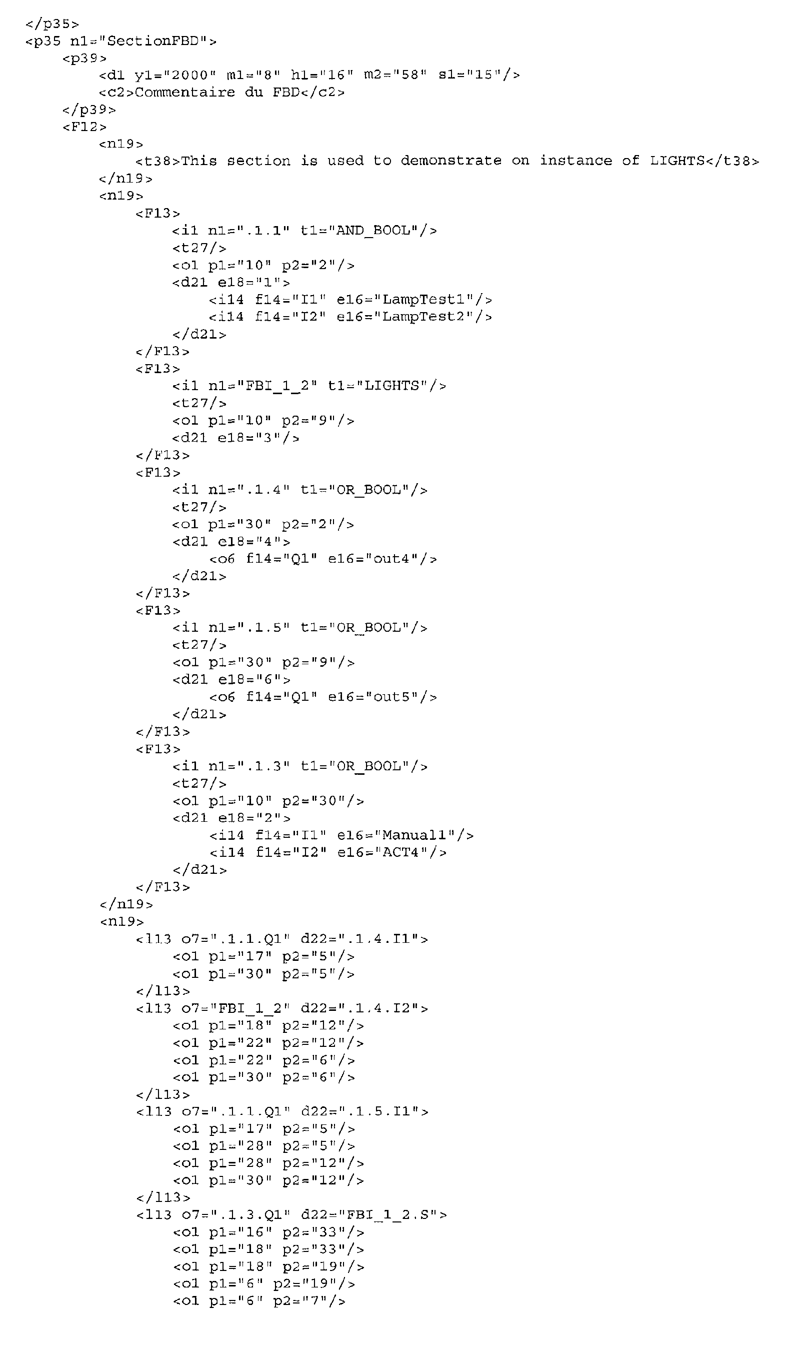

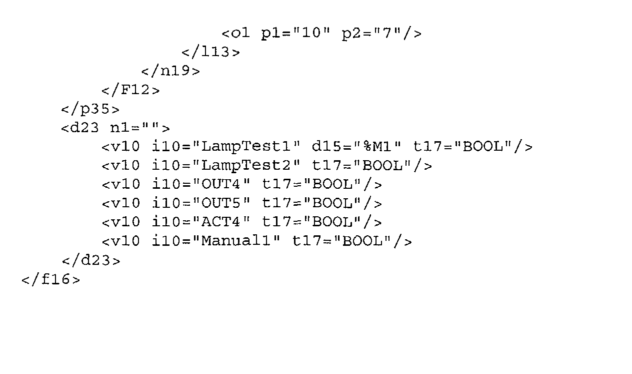

### ANNEXE 6

### Extrait d'une Feuille de style XSL permettant de réduire les balises

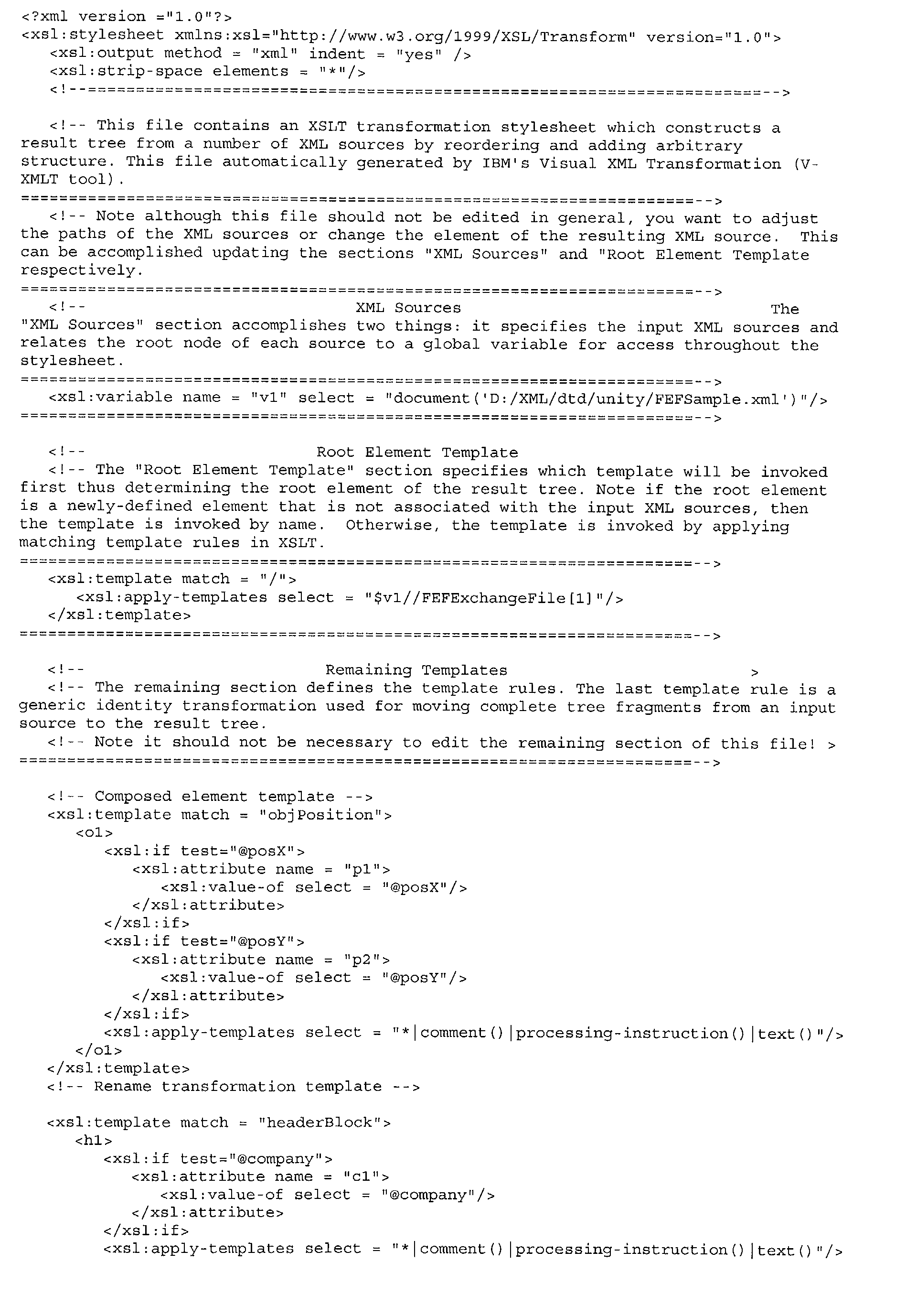

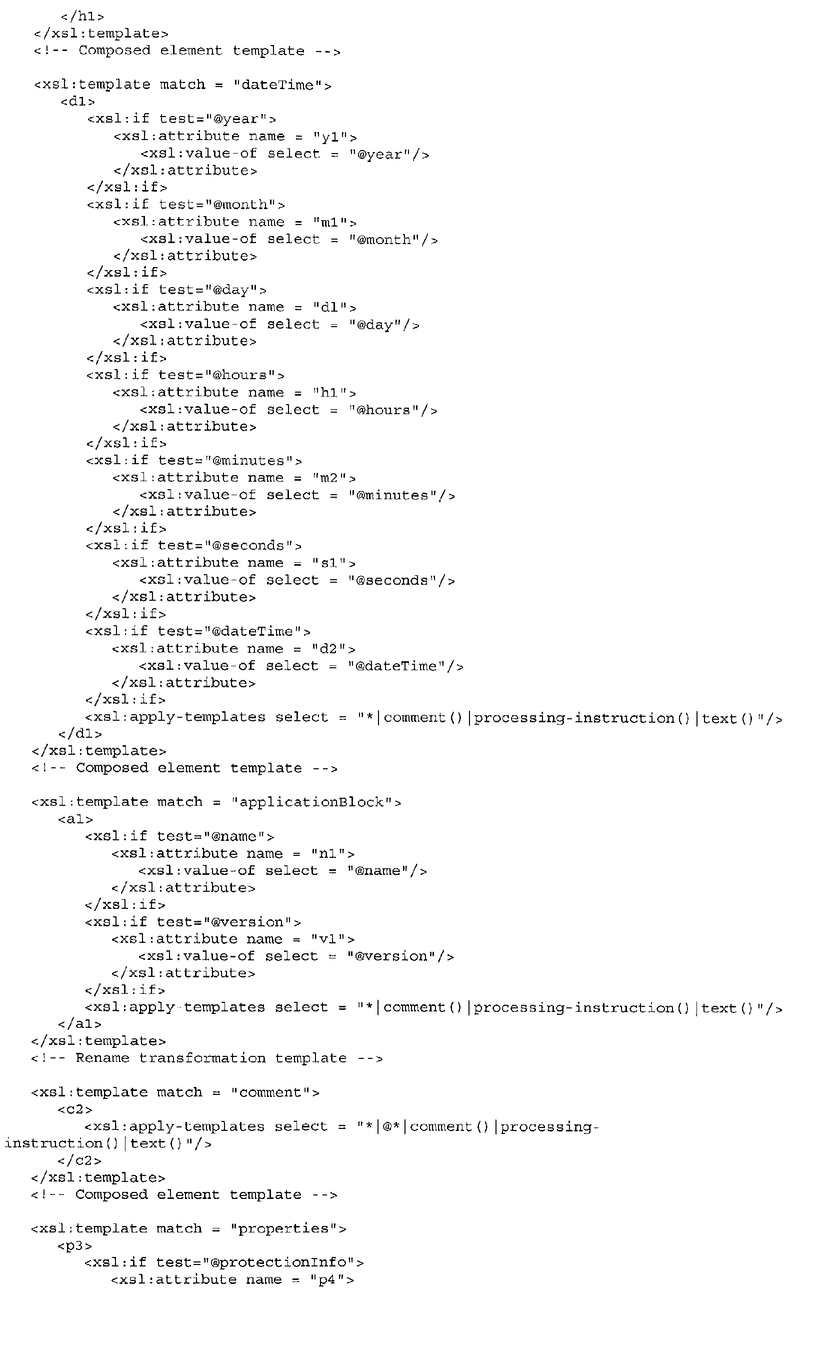

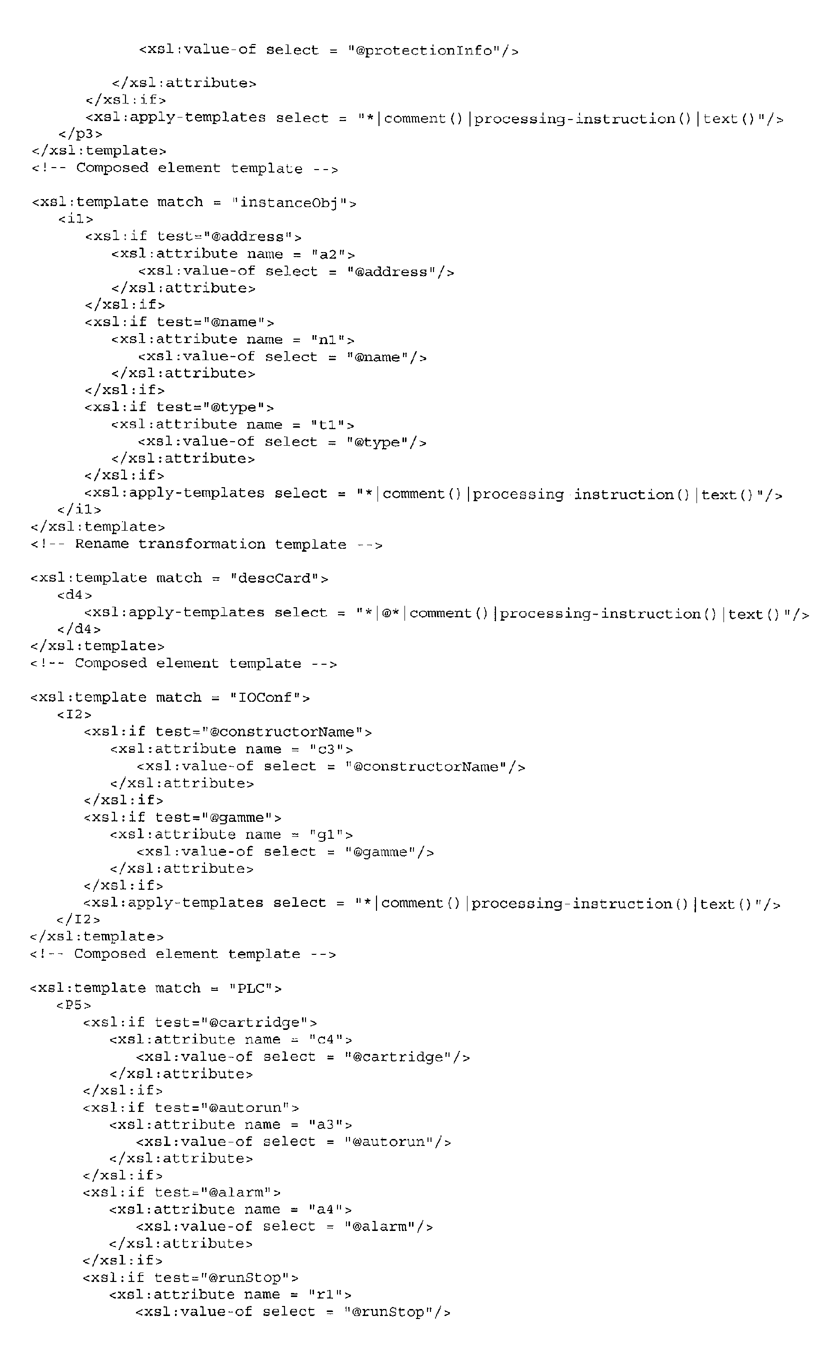

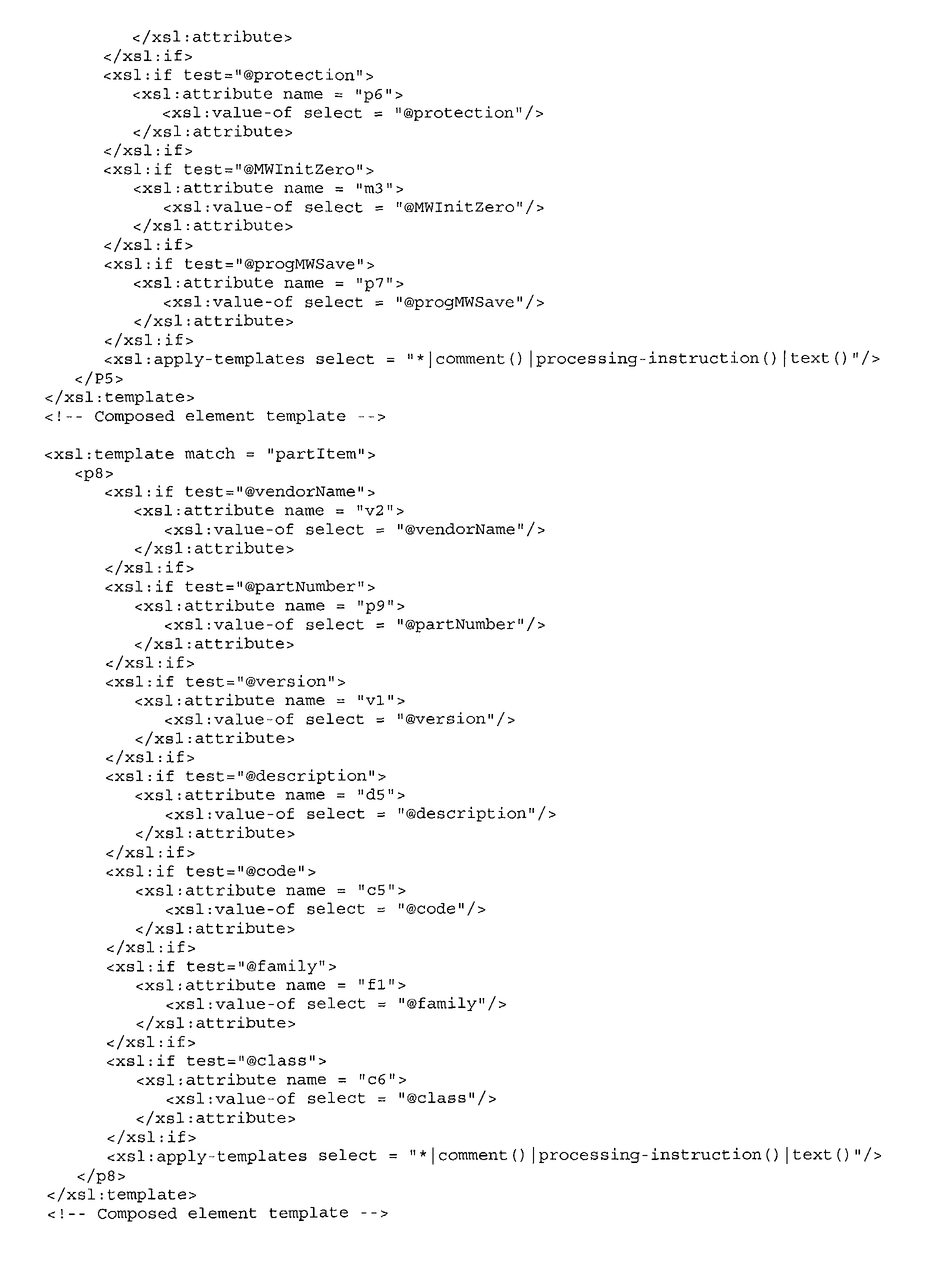

## Revendications

1. Station de programmation d'une application d'automatisme destinée à être exécutée dans un équipement d'automatisme, la station de programmation comportant une mémoire contenant un ensemble d'un ou plusieurs fichiers de description (401), chaque fichier de description étant descriptif d'une partie de l'application d'automatisme et étant exprimé dans un langage unique, hiérarchisé et orienté objet, **caractérisée en ce que** la station de programmation utilise un programme de compression (60) permettant de générer, pour chaque fichier de description, un fichier au format compacté (501), dont le contenu reste suffisant à la description de la partie de l'application considérée, et **en ce qu'**elle utilise un programme de chargement pour mémoriser chaque fichier compacté (501) dans une mémoire (50) de l'équipement d'automatisme.

2. Station de programmation selon la revendication 1, **caractérisée en ce qu'**elle utilise un programme de décompression (61) pour générer à partir d'un fichier compacté (501) mémorisé dans la mémoire (50) de l'équipement d'automatisme, un fichier de description (401) dans un langage unique, hiérarchisé et orienté objet, descriptif d'une partie de l'application.

3. Station de programmation selon la revendication 2, **caractérisée en ce que** le langage unique, hiérarchisé et orienté objet est le langage XML.

4. Station de programmation selon l'une des revendications 1 à 3, **caractérisée en ce que** l'ensemble des fichiers de description (401) contient un fichier de description du programme d'application, un fichier de description des entrées-sorties de l'application et un fichier de description des données de l'application.

5. Station de programmation selon la revendication 3, **caractérisée en ce que** le programme de compression (60) et le programme de décompression (61) comportent deux étapes.

6. Station de programmation selon la revendication 3, **caractérisée en ce que** le programme de compression (60) comporte une étape de réduction des balises contenues dans un fichier de description (401) exprimé en langage XML par application d'une feuille de style spécifique (601) et une étape de déroulement d'un algorithme de compactage (603) adapté aux fichiers XML.

7. Station de programmation selon la revendication 3, **caractérisée en ce que** le programme de décompression (61) comporte une étape de déroulement d'un algorithme de décompactage (603) adapté aux fichiers XML et une étape de recréation des balises d'origine contenues dans un fichier de description (401) exprimé en langage XML, par application d'une feuille de style spécifique (601).

8. Station de programmation selon l'une des revendications précédentes, **caractérisée en ce qu'**elle incorpore, dans une mémoire non volatile, un gestionnaire XML Hndlr (20) dialoguant par des notifications, d'une part avec un module de gestion de l'arborescence (30) représentative de l'application d'automatisme exprimée en langage XML et d'autre part avec une pluralité de gérants (Mng1,Mng2,...) de bases de données, chaque gérant étant spécifique à une partie de l'application d'automatisme mémorisée dans une des bases de données (Db1, Db2,...).

9. Equipement d'automatisme comprenant une mémoire (50) contenant un programme d'application d'automatisme sous la forme d'un fichier binaire (502) exécutable par l'équipement d'automatisme, **caractérisé en ce que** l'équipement d'automatisme mémorise dans la mémoire (50), en plus du fichier exécutable (502), un ou plusieurs fichiers au format compacté (501) obtenus à partir d'un ensemble d'un ou plusieurs fichiers de description (401) descriptifs de l'application d'automatisme et exprimés dans un langage unique, hiérarchisé et orienté objet.

10. Equipement d'automatisme selon la revendication 9, **caractérisé en ce que** le langage unique, hiérarchisé et orienté objet est le langage XML.

11. Equipement d'automatisme selon la revendication 10, **caractérisé en ce qu'**il comporte des moyens de traduction permettant de convertir des fichiers de description (401) de l'application exprimés en langage XML en un fichier binaire (502) exécutable par l'équipement d'automatisme.

12. Equipement d'automatisme selon la revendication 10 ou 11, **caractérisé en ce qu'**il comporte des moyens de décompression d'un fichier en langage compacté (501) vers un fichier de description en langage XML (401) grâce à l'utilisation d'une feuille de style spécifique (601) mémorisée dans la mémoire (50).
